# EUROPEAN PATENT APPLICATION

(11) **EP 4 721 843 A1**
(43) Date of publication of application: **08.04.2026**
(21) Application number: 25790594.3
(22) Date of filing: 18.04.2025
(51) Int. Cl.: B01D 53/22, B01D 69/08

(54) **GAS SEPARATION MEMBRANE UNIT, GAS SEPARATION SYSTEM, AND METHOD FOR PRODUCING ENRICHED GAS**

(30) Priority: 19.04.2024 JP 2024068393
(71) Applicant: UBE Corporation, Ube-shi, Yamaguchi 755-8633 (JP)
(72) Inventor: FUKUDA, Nobuhiko, Ube-shi, Yamaguchi 755-8633 (JP); TANIHARA, Nozomu, Ube-shi, Yamaguchi 755-8633 (JP)
(74) Representative: Forstmeyer, Dietmar
(86) International application number: PCT/JP2025/015304
(87) International publication number: WO 2025/220752

(57) **Abstract**

To provide a gas separation membrane unit capable of performing gas separation excellent in recovery rate and purity of a product gas, and a gas separation system using the same.

[Solution]

A gas separation membrane unit to which raw material gas mixture is supplied to concentrate and enrich at least one of gases contained in the raw material gas mixture,
wherein the gas separation membrane unit comprises a plurality of gas separation membrane modules combined in parallel,
each of the gas separation membrane modules comprises: a gas inlet; a non-permeated gas outlet; and a permeated gas outlet, the gas inlet, the non-permeated gas outlet, and the permeated gas outlet are shared to constitute a gas inlet, a non-permeated gas outlet, and a permeated gas outlet of the gas separation membrane unit, and
a coefficient of variation of a gas separation selectivity among the plurality of gas separation membrane modules is 0.01 or more and 0.49 or less, or has a coefficient of variation of a gas permeability among the plurality of gas separation membrane modules is 0.01 or more and 0.49 or less.

## Description

### Technical Field

The present invention relates to a gas separation membrane unit including a plurality of modules, a gas separation system that separates a mixed gas using the gas separation membrane unit, and a method for producing an enriched gas using the gas separation system.

### Background of the Invention

As a method for separating a mixed gas containing two or more kinds of different gases into respective gases, a membrane separation method utilizing a difference in permeation rate of a gas with respect to a membrane is known. In this method, a high-purity high-permeability gas and/or a high-purity low-permeability gas, which are target gases, can be obtained by collecting the permeated gas and/or the non-permeated gas. The permeation rate, which is the permeation volume per unit film area, unit time, and unit partial pressure difference of each gas contained in the mixed gas with respect to the film, can be expressed by P' (unit: ×10⁻⁵cm³(STP)/cm² • sec • cmHg). The gas separation selectivity of the membrane can also be expressed as (permeation rate of high-permeability gas/permeation rate of low permeability gas).

It has been described that a gas separation membrane unit having predetermined gas permeability and gas separation selectivity, in which gas separation membrane modules are combined in parallel, is used to separate a raw material gas mixture (for example, Patent Literature 1 and Patent Literature 2).

### Citation List

### Patent Literature

Patent Literature 1: JP2013-128868A
Patent Literature 2: US2020/0316516A1

### Summary of Invention

### Technical Problem

In the related art, variations in gas permeability and gas separation selectivity in a gas separation membrane module inside a gas separation membrane unit are not evaluated at all, including a case of evaluating gas separation performance by simulation as described in Patent Literature 2.

However, in a gas separation membrane unit in which a plurality of gas separation membrane modules are combined, gas permeability and gas separation selectivity actually vary among the modules. The present inventors have found that the conventional gas separation membrane unit does not achieve the originally assumed product gas purity and/or product gas recovery rate due to variations in gas permeability and gas separation selectivity between the modules.

Accordingly, it is an object of the present invention to provide a gas separation membrane unit, a gas separation system, and a method for producing an enriched gas, which can solve the above-described drawbacks of the prior art, and achieve the originally assumed product gas purity and/or product gas recovery rate.

### Solution to Problem

The present invention provides the following configuration.

[1] A gas separation membrane unit to which a raw material gas mixture is supplied to concentrate and enrich at least one of gases contained in the raw material gas mixture,
   wherein the gas separation membrane unit comprises a plurality of gas separation membrane modules combined in parallel,
   each of the gas separation membrane modules comprises: a gas inlet; a non-permeated gas outlet; and a permeated gas outlet,
   the gas inlets of each of the gas separation membrane modules are shared to constitute the gas inlet of the gas separation membrane unit,
   the non-permeated gas outlets of each of the gas separation membrane modules are shared to constitute the non-permeated gas outlet of the gas separation membrane unit,
   the permeated gas outlets of each of the gas separation membrane modules are shared to constitute the permeated gas outlet of the gas separation membrane unit, and
   a coefficient of variation of a gas separation selectivity among the plurality of gas separation membrane modules is 0.01 or more and 0.49 or less, or a coefficient of variation of a gas permeability among the plurality of gas separation membrane modules is 0.01 or more and 0.49 or less..
[2] The gas separation membrane unit according to [1], wherein the gas separation membrane constituting the gas separation membrane module is a hollow fiber membrane having an asymmetric structure made of a polymer.
[3] The gas separation membrane unit according to [1] or [2], being (1) or (2) below:
   (1) The raw material gas mixture contains carbon dioxide (CO₂) and methane (CH₄),
      the gas separation selectivity is a permeation rate ratio P'CO₂/P'CH₄ of CO₂ to CH₄,
      the gas permeability is a permeation rate P'CO₂ of CO₂, and
      the unit of the permeation rate is cm³(STP)/cm²•sec•cmHg;
   (2) The raw material gas mixture contains nitrogen (N₂) and oxygen (O₂),
      the gas separation selectivity is a permeation rate ratio P'O₂/P'N₂ of O₂ to N₂,
      the gas permeability is a permeation rate P'O₂ of O₂, and
      the unit of the permeation rate is cm³(STP)/cm²•sec•cmHg.
[4] A gas separation system for supplying a raw material gas mixture to a gas separation membrane unit to concentrate and enrich at least one of gases contained in the raw material gas mixture, wherein
   the gas separation system comprises at least a first gas separation membrane unit comprising a gas inlet,
   the gas separation system comprises:
      a raw material gas mixture supply line connected to the gas inlet of the first gas separation membrane unit; and
      a compression means disposed in the raw material gas mixture supply line;
   the first gas separation membrane unit comprises the gas separation membrane unit according to any one of [1] to [3].
[5] A gas separation system for supplying a raw material gas mixture to a gas separation membrane unit to concentrate and enrich at least one of gases contained in the raw material gas mixture, wherein
   the gas separation system comprises: at least
      a first gas separation membrane unit comprising a gas inlet and a non-permeated gas outlet; and
      a second gas separation membrane unit comprising a gas inlet and a permeated gas outlet,
   the gas separation system comprises:
      a raw material gas mixture supply line connected to the gas inlet of the first gas separation membrane unit;
      a compression means disposed in the raw material gas mixture supply line;
      a first line connecting the non-permeated gas outlet of the first gas separation membrane unit and the gas inlet of the second gas separation membrane unit; and
      a second line connecting the permeated gas outlet of the second gas separation membrane unit and the raw material gas mixture supply line, and
   at least one of the first gas separation membrane unit and the second gas separation membrane unit comprises the gas separation membrane unit according to any one of [1] to [3].
[6] A gas separation system for supplying a raw material gas mixture to a gas separation membrane unit to concentrate and enrich at least one of gases contained in the raw material gas mixture, wherein
   the gas separation system comprises:
      a first gas separation membrane unit comprising a gas inlet, a non-permeated gas outlet and a permeated gas outlet;
      a second gas separation membrane unit comprising a gas inlet and a permeated gas outlet; and
      a third gas separation membrane unit comprising a gas inlet and a non-permeated gas outlet,
   the gas separation system comprises:
      a raw material gas mixture supply line connected to the gas inlet of the first gas separation membrane unit;
      a compression means disposed in the raw material gas mixture supply line;
      a first line connecting the non-permeated gas outlet of the first gas separation membrane unit and the gas inlet of the second gas separation membrane unit;
      a second line connecting the permeated gas outlet of the second gas separation membrane unit and the raw material gas mixture supply line; and
      a third line connecting the permeated gas outlet of the first gas separation membrane unit and the gas inlet of the third gas separation membrane unit; and
      a fourth line connecting the non-permeated gas outlet of the third gas separation membrane unit and the raw material gas mixture supply line, and
   at least one of the first gas separation membrane unit, the second gas separation membrane unit and the third gas separation membrane unit comprises the gas separation membrane unit according to any one of [1] to [3].
[7] A method for producing an enriched gas by using the gas separation system according to [5] or [6], wherein the enriched gas is removed from the non-permeated gas outlet of the second gas separation membrane unit.

### Brief Description of Drawings

[Fig. 1] Fig. 1 is a schematic diagram showing a configuration of a gas separation system according to a first embodiment of the present invention.
[Fig. 2] Fig. 2 is a schematic view showing a structure of an example of a gas separation membrane module used in the gas separation system of the present invention.
[Fig. 3] Fig. 3 is a schematic view showing an example of a connecting method of gas separation membrane modules used in the gas separation system of the present invention.
[Fig. 4] Fig. 4 is a schematic diagram showing a configuration of a gas separation system according to a second embodiment of the present invention.
[Fig. 5] Fig. 5 is a schematic diagram showing a configuration of a gas separation system according to a third embodiment of the present invention.

### Description of Embodiments

Hereinafter, the present invention will be described based on preferred embodiments thereof with reference to the drawings. In the present specification, the term "assumed product gas purity and product gas recovery rate" refers to the purity and recovery rate calculated by simulation, for example, under the assumption that the variation coefficient of the gas permeation rate or gas separation selectivity of the plurality of the gas separation membrane modules constituting the gas separation membrane unit is zero, or to values close to such calculated purity and recovery rate.

The upper limit and the lower limit of the numerical values in the present specification can be combined without any limitation.

It should be noted that the expression "connecting A and B by line C" or "line C connecting A and B" encompasses both cases where A, B, and line C are separate members, and cases where A and/or C are integrally formed as a single member. Similarly, the expression "connecting line E to D" also encompasses both cases where D and line E are separate members, and cases where D and line E are formed as a single member.

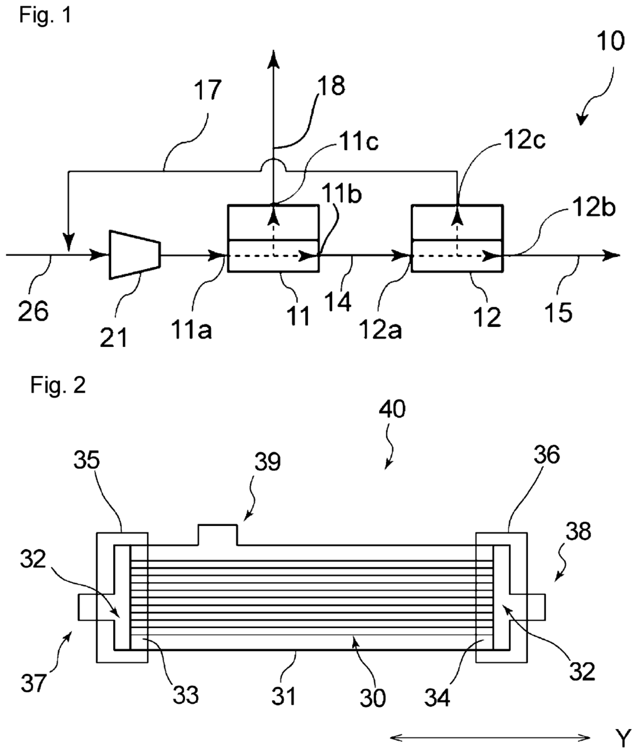

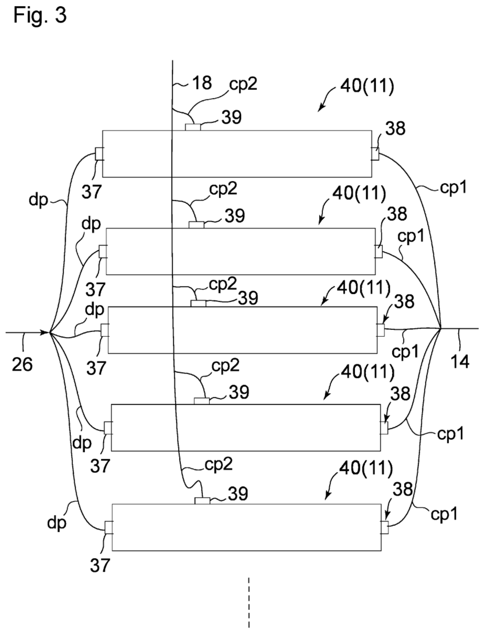

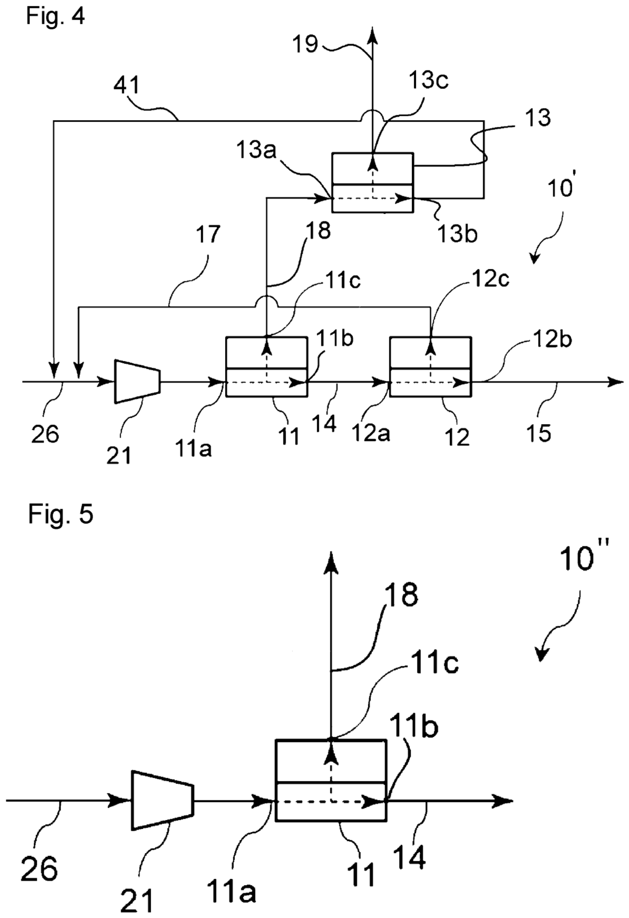

Each of the gas separation systems shown in Figs. 1 and 3 includes a first gas separation membrane unit 11 and a second gas separation membrane unit 12. The gas separation system shown in Fig. 4 further includes a third gas separation membrane unit 13. The gas separation system shown in Fig. 1 includes a first gas separation membrane unit 11.

As the gas separation membrane units 11, 12, and 13, for example, as shown in Fig. 2, a module 40 in which a gas separation membrane 30 made of a hollow fiber membrane or the like and having gas selective permeability is accommodated in a casing 31 can be used. Each of the gas separation membrane units 11, 12, and 13 shown in Figs. 1 and 4 includes, for example, a plurality of gas separation membrane modules 40 shown in Fig. 2 combined in parallel. Two opposing surfaces of the casing 31 of the module 40 are opened to form an opening 32. It should be noted that the opening 32 is for inserting the gas separation membrane 30 into the casing 31, and is not an opening of the gas separation membrane 30. The gas separation membrane 30 is accommodated in the casing 31 through the opening 32. In the case where the gas separation membrane 30 is formed of a hollow fiber membrane bundle, the gas separation membrane 30 is housed in the casing 31 in the housed state so that each end portion of the hollow fiber membrane is opened in the vicinity of each opening 32 of the casing 31.

The hollow fiber gas separation membrane module such as the module 40 is obtained by, for example, bundling preferably about 100 to 1000000 (more preferably about 100 to 200000) hollow fiber membranes having an appropriate length to obtain a hollow fiber membrane bundle, fixing both end portions of the hollow fiber membrane bundle by a tube plate made of a thermosetting resin or the like in such a manner that at least one end of the hollow fiber is maintained in an open state to obtain a hollow fiber membrane element made of the hollow fiber membrane bundle and the tube plate or the like, and a hollow fiber membrane element made of the obtained hollow fiber membrane bundle, the tube plate and so on, and housing and attaching the hollow fiber membrane in a container having at least a mixed gas inlet, a permeated gas outlet, and a non-permeated gas outlet in such a manner that a space communicating with the inside of the hollow fiber membrane and a space communicating with the outside of the hollow fiber membrane are isolated from each other.

In a state where the gas separation membrane 30 is housed in the casing 31, the gas separation membrane 30 is fixed to the inner wall of the casing 31 by the tube plates 33 and 34 at positions of both end portions in the Y direction which is the extending direction of the hollow fiber membrane. Each opening 32 of the casing 31 is closed by lids 35 and 36. The lid 35 is provided with a gas inlet 37. On the other hand, the lid 36 is provided with a non-permeated gas outlet 38. The mixed gas to be separated is introduced into the module from the gas inlet 37 of the lid 35. Among the introduced gases, the gas that has permeated the gas separation membrane 30 is discharged to the outside of the module through a permeated gas outlet 39 provided in the casing 31. On the other hand, the non-permeated gas that has not permeated the gas separation membrane 30 is discharged from the non-permeated gas outlet 38 of the lid 36 to the outside of the module.

As described above, the gas separation membrane unit 11 (or 12 or 13) in the present specification is formed by combining a plurality of gas separation membrane modules 40 in parallel. Each of the gas separation membrane modules 40 has a gas inlet 37, a non-permeated gas outlet 38, and a permeated gas outlet 39. The gas inlets 37 of each of the gas separation membrane modules 40 are shared to constitute a gas inlet 11a (or 12a, 13a) of the gas separation membrane unit, the non-permeated gas outlets 38 of each of the gas separation membrane modules 40 are shared to constitute a non-permeated gas outlet 11b (or 12b, 13b) of the gas separation membrane unit, and the permeated gas outlets 39 of each of the gas separation membrane modules 40 are shared to constitute a permeated gas outlet 11c (or 12c, 13c) of the gas separation membrane unit.

In some cases, a purge gas supply port (not shown) may be provided in the casing 31. Although the separation membrane module of Fig. 2 has been described as an example, the present invention can be applied to separation membrane modules having other configurations, and can be applied to, for example, a shell feed type module.

In the present invention, the flow rates of the modules may be the same or different. In the gas separation membrane system of the present invention, the flow rate of each module constituting one unit is not controlled by providing a valve or the like. When the entire length of the module having the maximum entire length among the modules constituting the single unit is L1 and the entire length of the module having the minimum entire length among the modules constituting the single unit is L2, {(L1-L2)/L1}×100 [unit: %] is preferably 10% or less, more preferably 5% or less, still more preferably 3% or less, and most preferably 1% or less. The ratio, S1:S2, between the membrane area S1 of the module having the largest membrane area among the modules constituting a single unit and the membrane area S2 of the module having the smallest membrane area among the modules is preferably 1:1 to 5, more preferably 1:1 to 3, still more preferably 1:1 to 1.5, and most preferably 1:1 to 1.1.

Fig. 3 is a schematic diagram illustrating a gas separation membrane unit in which multiple gas separation membrane modules are connected in parallel. For example, the gas inlet 37 of each module is connected to a main pipe that communicates with either the gas outlet of another unit or with the outside of the system via a distribution pipe dp.

Also, the non-permeated gas outlet 38 of each module constituting the single unit communicates with a main pipe that communicates with a gas inlet of another unit or a main pipe that communicates with the outside of the system. For example, in the system of Fig. 1 to be described later, as described in Fig. 3, the non-permeated gas discharged from the non-permeated gas outlet 38 of each module of the first gas separation membrane unit 11 merges in a line 14 by a merging pipe cp1, and is supplied to the second gas separation membrane unit 12. Similarly, the non-permeated gas discharged from the non-permeated gas outlet 38 of each module of the second gas separation membrane unit 12 merges in the line 15 by a merging pipe (not shown), and is supplied to the second gas separation membrane unit 12.

Similarly, the permeated gas discharged from the permeated gas outlet 39 of each module constituting the single unit is communicated with a main pipe (not shown) by a merging pipe that merges with a main pipe communicating with a gas inlet of another unit or the outside of the system. For example, in the embodiment of Fig. 1 to be described later, as described in Fig. 3, the permeated gas discharged from the permeated gas outlet 39 of each module of the first gas separation membrane unit 11 merges in the line 18 by a merging pipe cp2, and is supplied to the outside of the system. Further, the permeated gas discharged from the permeated gas outlet 39 of each module of the second gas separation membrane unit 12 merges in a line 17 by a merging pipe (not shown), is supplied to the suction side of the compressor 21, is compressed and is supplied to the first gas separation membrane unit 11.

The gas separation membrane module used in the present invention is preferably made of a hollow fiber membrane. In such a gas separation membrane module, in each manufacturing process of bundling a bundle of hollow fiber membranes made of a large number of hollow fiber membranes or fixing the bundle of hollow fiber membranes with a tube plate made of a thermosetting resin, contact between the bundled hollow fibers and/or deflection, deformation, yarn breakage, and the like of the hollow fibers themselves occur. Due to the complicated influence of such a difference in the state of the hollow fibers, the performance of the manufactured hollow fiber gas separation membrane module is hardly varied even if the same number of hollow fibers are manufactured in the same process. Therefore, it is preferable that the gas separation membrane modules used in the present invention are made of hollow fiber membranes, because the gas separation membrane modules have excellent technical significance in that the coefficient of variation of the gas permeability and/or the gas separation selectivity of the gas separation membrane modules is equal to or less than a certain value.

Furthermore, in the gas separation membrane module used in the present invention, a hollow fiber membrane made of a polymer and having an asymmetric structure can be suitably used as the gas separation membrane. The hollow fiber membrane having an asymmetric structure has a skin layer and a porous layer. The skin layer mainly assumes for gas separation performance and is thinner than the porous layer. The skin layer is a very dense layer as compared with the porous layer, and is usually extremely thin, and preferably has a thickness of 1 nm or more and 5 µm or less, and more preferably 10 nm or more and 200 nm or less. The porous layer is a relatively thick porous layer supporting the skin layer, and preferably has a thickness of 10 µm or more and 2000 µm or less, and more preferably 20 µm or more and 200 µm or less. The diameter of the pores of the porous layer is not particularly limited, but is generally 0.01 to 100 µm in many cases, and more preferably 0.01 to 50 µm. Such a hollow fiber membrane has a wide effective surface area, high pressure resistance, and is excellent as a gas separation membrane.

Further, in the hollow fiber membrane made of a polymer and having an asymmetric structure, as described above, it is necessary to control the matrix of the porous layer and the skin layer on the nm and µm scales by, for example, the dry/wet phase inversion method described later, and further, since the skin layer contributing to the gas separation performance is extremely thin, even if the production conditions are closely adjusted by the same production method, for example, differences in the presence or absence of fine defects of the skin layer, the thickness and shape of the skin layer, and the like occur at least for each production lot.

In addition, since the purity of the raw material of the polymer, and/or the amount of impurities contained in the raw material, and the amount of moisture contained in the raw material are not always constant, the various properties such as the viscosity of the polymer itself or the concentration of the polymer itself with respect to the solvent obtained by polymerization using these raw materials are hardly the same for each lot. Therefore, in a hollow fiber membrane having an asymmetric structure manufactured by using polymers having different properties for each lot, the above-described factors are intricately affected, and thus the gas separation characteristics are likely to vary. Therefore, it is preferable that the gas separation membrane unit used in the present invention is made of gas separation membrane modules manufactured from hollow fiber membranes having an asymmetric structure, because the gas separation membrane modules have excellent technical significance in setting the coefficient of variation of the gas permeability and/or the gas separation selectivity to a certain value or less.

As a method of making the coefficient of variation of the gas separation membrane modules equal to or less than a certain value, there is a method of minimizing variations in gas separation selectivity and gas permeation performance of hollow fiber membranes and gas separation membrane modules to be manufactured. For example, as described above, it can be realized by controlling the purity and/or the impurity amount of the raw material of the polymer used for manufacturing the hollow fiber membranes to a certain degree, and/or by controlling the polymerization conditions of the polymer and the manufacturing conditions of the hollow fiber membranes and the gas separation membrane modules in detail. In addition, a method of measuring the gas separation selectivity and the gas permeability of the manufactured modules and selecting a combination in which the coefficient of variation is equal to or less than a certain value from the measured data is also available. By simultaneously performing these steps, the coefficient of variation of the gas separation membrane unit can be set to a certain value or less more efficiently.

The hollow fiber membrane preferably has an inner diameter of about 10 to 3000 µm, and more preferably 30 to 500 µm. The outer diameter of the hollow fiber membrane is preferably about 30 to 7000 µm, and more preferably 35 to 700 µm. The thickness of the skin layer and the porous layer, the inner diameter and the outer diameter of the hollow fiber membrane, and the diameter of the hole can be measured using an optical microscope or an electron microscope.

The material of the gas separation membrane constituting the gas separation membrane module of the present invention is not particularly limited, and examples thereof include polyimide, polyamide, polysulfone, polyethersulfone, polyamideimide, polyetherimide, and polycarbonate. Among them, the gas separation membrane is preferably made of polyimide from the viewpoint of durability, heat resistance, separability, and the like.

When polyimide is used as the gas separation membrane, it can be obtained by dehydration and imidization using a tetracarboxylic acid component and a diamine component.

As the tetracarboxylic acid component, aliphatic tetracarboxylic acid dianhydride or aromatic tetracarboxylic acid dianhydride can be used. On the other hand, as the diamine component, aliphatic diamine or aromatic diamine can be used.

Examples of aliphatic tetracarboxylic acid dianhydrides include cyclobutane-1,2,3,4-tetracarboxylic acid dianhydride, 1,2,4,5-cyclohexanetetracarboxylic acid dianhydride, dicyclohexyl-3,3',4,4'-tetracarboxylic acid dianhydride, 1,2,4,5-cyclohexanetetracarboxylic acid-1,2:4,5-dianhydride, 1,2,3,4-cyclobutanetetracarboxylic acid dianhydride, bicyclo[2.2.2]oct-7-ene-2,3; 5,6-examples thereof include tetracarboxylic dianhydride.

The aromatic tetracarboxylic acid dianhydride preferably has 2 to 3 aromatic rings, and examples thereof include 3,3',4,4'-biphenyltetracarboxylic acid dianhydride, 4,4'-(hexafluoroisopropylidene)-bis(phthalic anhydride) (This compound is also referred to as 2,2-bis(3,4-dicarboxyphenyl)hexafluoropropane dianhydride.), 2,3,3',4'-biphenyltetracarboxylic acid dianhydride, 2,2', examples thereof include 3,3'-biphenyltetracarboxylic dianhydride, pyromellitic dianhydride, benzophenonetetracarboxylic dianhydride, 4,4'-oxydiphthalic dianhydride, diphenylsulfonetetracarboxylic dianhydride, p-terphenyltetracarboxylic dianhydride, and m-terphenyltetracarboxylic dianhydride.

Examples of the aliphatic diamine include trans-1,4-diaminocyclohexane, cis-1,4-diaminocyclohexane, 1,6-hexamethylenediamine, 1,10-decamethylenediamine, 1,3-bis(aminomethyl)cyclohexane, 1,4-bis(aminomethyl)cyclohexane, and polyoxypropylenediamine having a weight average molecular weight of 500 or less.

Examples of aromatic diamines include paraphenylenediamine, metaphenylenediamine, 4,4'-oxydianiline, 3,4'-oxydianiline, 4,4'-diaminodiphenylmethane, 2,4-toluenediamine, 3,3'-dihydroxy-4,4'-diaminobiphenyl, bis(4-amino-3-carboxyphenyl)methane, 2,4-diaminotoluene, and 3,5-diaminobenzoic acid, 3,7-diamino-2,8-dimethyldibenzothiophene=5,5-dioxide as main component, isomer 3,7-diamino-2,6-dimethyldibenzothiophene=5,5-dioxide having different methyl group positions, 3,7-diamino-4,6-dimethyldibenzothiophene=5,5-dioxide, 2,2',5,5'-tetrachlorobenzidine, 3,3',5,5'-tetrachlorobenzidine, 3,3'-dichlorobenzidine, 2,2'-dichlorobenzidine, 2,2', examples thereof include 3,3',5,5'-hexachlorobenzidine, 2,2',5,5'-tetrabromobenzidine, 3,3',5,5'-tetrabromobenzidine, 3,3'-dibromobenzidine, 2,2'-dibromobenzidine, 2,2',3,3',5,5'-hexachlorobenzidine, 3,3'-diaminodiphenylsulfone, 3,3'-diamino-4,4'-dimethyl-diphenylsulfone, and 3,3'-diamino-4,4'-diethyl-diphenylsulfone.

In the present invention, when polyimide is used as the material of the gas separation membrane constituting the gas separation membrane module, aromatic polyimide may be used in particular. The aromatic polyimide can be obtained using an aromatic tetracarboxylic acid component and an aromatic diamine component.

### <Method for producing gas separation membrane>

For example, as a preferable method for producing the gas separation membrane, there is a method of producing the gas separation membrane by a dry/wet phase inversion method using a polymer solution containing a polymer and a solvent.

As one aspect of the method for preparing a polymer solution used in the present invention, a method for preparing a polyimide solution will be described. The polyimide solution is preferably prepared by a two-stage method or a one-stage method. The two-stage method is performed by adding a tetracarboxylic acid component and a diamine component to an organic polar solvent at a predetermined composition ratio to polymerize them at a low temperature of about room temperature to produce a polyamic acid, and then heat-imidizing the polyamic acid or adding pyridine or the like to the polyamic acid to chemically imidize the polyamic acid. The one-stage method is performed by adding a tetracarboxylic acid component and a diamine component to an organic polar solvent at a predetermined composition ratio and polymerizing and imidizing them at a high temperature of about 100 to 250°C, preferably about 130 to 200°C. When the imidization reaction is performed by heating, it is preferable to perform the imidization reaction while removing desorbed water or alcohol.

Examples of the organic polar solvent include: phenolic solvents such as phenol, cresol and xylenol; catechols such as a catechol having two hydroxyl groups directly on a benzene ring, and resorcin; halogenated phenols such as 3-chlorophenol, 4-chlorophenol (the same as parachlorophenol described below), 3-bromophenol, 4-bromophenol and 2-chloro-5-hydroxytoluene; amide solvents including amides such as N-methyl-2-pyrrolidone, 1,3-dimethyl-2-imidazolidinone, N,N-dimethylformamide, N,N-diethylformamide, N,N-dimethylacetamide, and N,N-diethylacetamide; and a mixed solvent thereof.

The polyimide solution obtained by polymerization imidization can be directly used for spinning, as described later. In addition, for example, the obtained polyimide solution may be put into a solvent insoluble in polyimide to precipitate and isolate polyimide, and then dissolved again in an organic polar solvent to a predetermined concentration to prepare an aromatic polyimide solution, which may be used for spinning.

The hollow fiber membrane having the asymmetric structure can be suitably obtained by a dry/wet phase inversion method using a polymer solution. The dry/wet phase inversion method is a known method in which a polymer solution is brought into contact with a coagulation liquid to form a film while undergoing phase transformation. The dry/wet phase inversion method is a phase transformation method in which a thin dense layer is formed by evaporating a solvent on the surface of a polymer solution in the form of a film, then immersed in a coagulation liquid (a solvent which is compatible with the solvent of the polymer solution and in which the polymer is insoluble), and micropores are formed by utilizing a phase separation phenomenon generated at that time to form a porous layer, and is proposed by Loeb et al. (for example, US3133132A).

Examples of the polymer contained in the polymer solution include the various polymer materials listed above.

In the present invention, the solvent of the polymer solution used in the dry/wet phase inversion method preferably contains: a solvent capable of dissolving the polymer; and an aliphatic alcohol.

The solvent capable of dissolving the polymer is preferably an organic polar solvent, and may be the organic polar solvent used for synthesizing a polymer by polymerizing a monomer. In one aspect of the present invention, when the polymer is polyimide, the organic polar solvent may be any solvent as long as it can dissolve the polyimide, and examples thereof include the organic polar solvent used in the preparation of the polyimide solution described above.

The aliphatic alcohol contained as the solvent of the polymer solution preferably has a boiling point of 60°C or higher. The aliphatic alcohol may be a monovalent aliphatic alcohol or a divalent or higher aliphatic polyhydric alcohol.

The monohydric aliphatic alcohol as the solvent of the polymer solution is preferably acyclic, and may be linear or branched, and ,for example, has 1 to 7 carbon atoms. The aliphatic polyhydric alcohol as the solvent of the polymer solution is preferably acyclic, and may be linear or branched, and has carbon atoms of, for example, preferably 2 to 10, and more preferably 3 to 8.

As one aspect of the present invention, a method for producing a hollow fiber membrane by a dry/wet phase inversion method using a polymer solution will be described below.

First, in the spinning step (spinning dope discharging step), the spinning nozzle used for discharging the spinning dope solution may be any nozzle as long as the spinning dope solution is extruded into the hollow filamentous body, and is suitably a tube-in-orifice nozzle or the like. In general, the temperature range of the polymer solution (preferably the polyimide solution) at the time of extrusion is, for example, preferably about 20°C to 150°C, and more preferably 30°C to 120°C, depending on the types of the polymer and the solvent contained in the dope solution, the viscosity and the like. In addition, spinning is performed while supplying gas or liquid into the hollow fiber body extruded from the nozzle.

In the coagulation step continuing from the spinning step, the hollow fiber body discharged from the nozzle is once extruded in the air or in an inert gas atmosphere such as N₂, then is guided to a coagulation bath, and is immersed in the coagulation liquid. The coagulation liquid is preferably a liquid that does not substantially dissolve the polymer component and is compatible with the solvent of the polymer component. Although not particularly limited, water, lower alcohols such as methanol, ethanol, and propyl alcohol, ketones having a lower alkyl group such as acetone, diethyl ketone, and methyl ethyl ketone, or mixtures thereof are preferably used as the coagulation liquid. When the polymer solution is a polyimide solution and the solvent of the polyimide solution is an amide solvent, an aqueous solution of the amide solvent is also preferably used as the coagulation liquid.

The yarn obtained in the coagulation step is optionally washed with a washing solvent such as ethanol, and then an aliphatic hydrocarbon such as isopentane, n-hexane, isooctane, or n-heptane is applied to the yarn to replace the coagulation liquid and/or the washing solvent on the outside and inside of the hollow fiber with the aliphatic hydrocarbon. Further, the hollow fiber is dried at 100 to 200°C to obtain target hollow fiber.

As described above, in the present invention, in the case that the gas separation membrane constituting the gas separation membrane module is a hollow fiber membrane having an asymmetric structure made of a polymer, since the gas separation membrane is obtained through a multi-step process of spinning from a polymer solution as described above, variations in the thickness and/or permeability of the skin layer during production, the shape of the hollow fiber membrane such as the thickness and/or length, and the like become large. Therefore, the technical significance of setting the coefficient of variation of the gas permeability and/or the gas separation selectivity of the gas separation membrane modules to a certain value or less is excellent.

The present invention can be realized by selecting modules to be used such that the coefficient of variation remains below a predetermined value.

In the gas separation membrane unit of the present invention, a plurality of the above-described gas separation membrane modules 40 are combined in parallel, and in the unit, the coefficient of variation of the gas permeability or the gas separation selectivity among the plurality of gas separation membrane modules 40 is 0.01 or more and 0.49 or less. When the coefficient of variation among the gas separation membrane modules 40 is 0.49 or less, the recovery rate and purity of the obtained product gas can be increased. The reason why the present invention can obtain the above-described effects is considered to be that the variation in the flow rate of the supply gas flowing into each module in the same unit can be suppressed, and the load of gas separation in each module can be leveled, whereby a state in which too much or too little gas flows into a part of the modules with respect to the performance such as the gas permeability and/or the gas separation selectivity of the module can be avoided, and the original permeation performance can be exhibited. From the viewpoint of further improving the above effects, the coefficient of variation is preferably 0.45 or less, more preferably 0.40 or less, particularly preferably 0.35 or less, and still more preferably 0.30 or less.

In addition, the coefficient of variation is 0.01 or more, and more preferably 0.015 or more, from the viewpoint that the effect of improving the recovery rate or purity is not obtained even if the coefficient of variation is further reduced.

Since such a critical point is found, it is possible to reduce the manufacturing cost that occurs when the gas separation membrane module is manufactured in exactly the same manner up to a fine point. For example, conditions such as a change in temperature conditions in spinning, and/or a change in conditions such as a solvent to be used, a change in a mode of a manufacturing apparatus to be used can be relaxed, and a minute difference between lots can be tolerated, so that there is an advantage such as an improvement in yield.

It should be noted that, in the present specification, the expression "gas permeability or gas separation selectivity of the gas separation membrane module" refers to the gas permeability or gas separation selectivity of the gas separation membrane constituting the gas separation membrane module. Since there is a correlation between the gas permeability and the gas separation selectivity, the effect of the present invention can be achieved by defining the coefficient of variation for either one of the gas permeability and the gas separation selectivity.

For example, the coefficient of variation of the gas permeability is a numerical value (S/AV) obtained by dividing the standard deviation value S by an average value AV obtained by measuring the gas permeability of each gas separation membrane module. Similarly, the coefficient of variation of the gas separation selectivity is a numerical value (S/AV) obtained by dividing the standard deviation value S by an average value AV obtained by measuring the gas separation selectivity of each gas separation membrane module.

The gas permeability is a gas permeation rate of the high-permeability gas A. As described above, the permeation rate, which is the permeation volume per unit membrane area, unit time, and unit partial pressure difference, can be represented by P' (unit: ×10⁻⁵cm³(STP)/cm²•sec•cmHg). The gas separation selectivity of the membrane can be expressed by (permeation rate of high-permeability gas A/permeation rate of low-permeability gas B).

For each module in the unit of the present invention, gas A is highly permeable and gas B is less permeable. Further, in the system of the present invention, each unit and each module constituting the unit are normally highly permeable to the gas A and low permeable to the gas B.

In the gas separation membrane unit of the present invention, both the gas permeability and the gas separation selectivity of the gas separation membrane module preferably satisfy the range of the coefficient of variation from the viewpoint of further enhancing the recovery rate and purity of the obtained gas.

In the present invention, it is preferable that the high-permeability gas A is CO₂ (carbon dioxide) and the low-permeability gas B is CH₄ (methane) or the high-permeability gas A is O₂ (oxygen) and the low-permeability gas B is N₂ (nitrogen) because the effect of adopting a predetermined coefficient of variation is high. Particularly, it is preferable that the high-permeability gas A is CO₂ and the low-permeability gas B is CH₄ from the viewpoint of reducing environmental impact by improving CH₄ recovery efficiency.

The gas separation selectivity (P'_{A}/P'_{B}) of each gas separation membrane module at 40°C is preferably 2 or more and 1000 or less, more preferably 2.5 or more and 800 or less, still more preferably 3 or more and 500 or less.

In the case that the high-permeability gas A is CO₂ and the low-permeability gas B is CH₄, in order to obtain a high-purity product gas (CH₄) with a higher recovery rate more efficiently, the gas separation selectivity (P'CO₂/P'CH₄) of each gas separation membrane module at 40°C is preferably 5 or more and 150 or less, more preferably 10 or more and 130 or less, still more preferably 15 or more and 120 or less, and particularly preferably 20 or more and 110 or less.

Also, in the case that the high-permeability gas A is O₂ and the low-permeability gas B is N₂, in order to obtain a high-purity product gas with a higher recovery rate more efficiently, the gas separation selectivity (P'O₂/P'N₂) of each gas separation membrane module at 40°C is preferably 2 or more and 10 or less, more preferably 3 or more and 9 or less, still more preferably 4 or more and 8 or less, and particularly preferably 4.5 or more and 7.5 or less.

In the present invention, in order to obtain high-purity product gas with a higher recovery rate more efficiently, the permeation rate P'_{A} of the gas A of each gas separation membrane module at 40°C is preferably 0.1×10⁻⁵cm³(STP)/cm²•sec•cmHg or more and 500×10⁻⁵cm³(STP)/cm²•sec•cmHg or less, more preferably 0.5×10⁻⁵cm³(STP)/cm²•sec• cmHg or more and 400×10⁻⁵cm³(STP)/cm²•sec•cmHg or less, still more preferably 0.8×10⁻⁵cm³(STP)/cm²•sec•cmHg or more and 350×10⁻⁵cm³(STP)/cm²•sec•cmHg or less, and particularly preferably 1×10⁻⁵cm³(STP)/cm² • sec • cmHg or more and 300×10⁻⁵cm³(STP)/cm²•sec•cmHg or less.

In the present invention, in order to obtain high-purity product gas with a higher recovery rate more efficiently, the permeation rate P'_{B} of the gas B of each gas separation membrane module at 40°C is preferably 0.01×10⁻⁵cm³(STP)/cm²•sec•cmHg or more and 15×10⁻⁵cm³(STP)/cm²•sec•cmHg or less, more preferably 0.01×10⁻⁵cm³(STP)/cm²•sec• cmHg or more and 10×10⁻⁵cm³(STP)/cm² • sec • cmHg or less, still more preferably 0.02×10⁻⁵cm³(STP)/cm²•sec•cmHg or more and 7×10⁻⁵cm³(STP)/cm²•sec•cmHg or less, and particularly preferably 0.02×10⁻⁵cm³(STP)/cm² • sec • cmHg or more and 5×10⁻⁵cm³(STP)/cm²•sec•cmHg or less.

In the present invention, in the case that the high-permeability gas A is CO₂ and the low-permeability gas B is CH₄, in order to obtain a high-purity product gas (CH₄) with a higher recovery rate more efficiently, the permeation rate P'CO₂ of CO₂ of each gas separation membrane module at 40°C is preferably 1.5×10⁻⁵cm³(STP)/cm²•sec•cmHg or more and 275×10⁻⁵cm³(STP)/cm² • sec • cmHg or less, more preferably 2×10⁻⁵cm³(STP)/cm²•sec•cmHg or more and 100×10⁻⁵cm³(STP)/cm²•sec•cmHg or less, still more preferably 3×10⁻⁵cm³(STP)/cm² • sec · cmHg or more and 90×10⁻⁵cm³(STP)/cm² • sec • cmHg or less, and particularly preferably 7×10⁻⁵cm³(STP)/cm²•sec•cmHg or more and 80×10⁻⁵cm³(STP)/cm²•sec•cmHg or less.

In the present invention, in the case that the high-permeability gas A is CO₂ and the low-permeability gas B is CH₄, in order to obtain high purity CH₄ with a higher recovery rate more efficiently, the permeation rate P'_{CH4} of CH₄ of each gas separation membrane module at 40°C is preferably 0.03×10⁻⁵em³(STP)/cm²•sec•cmHg or more and 3×10⁻⁵cm³(STP)/cm²•sec•cmHg or less, more preferably 0.05×10⁻⁵cm³(STP)/cm²•sec• cmHg or more and 2.5×10⁻⁵cm³(STP)/cm² • sec • cmHg or less, still more preferably 0.05×10⁻⁵cm³(STP)/cm²•sec•cmHg or more and 2.0×10⁻⁵cm³(STP)/cm²•sec•cmHg or less, and particularly preferably 0.08×10⁻⁵cm³(STP)/cm² • sec · cmHg or more and 1.5×10⁻⁵cm³(STP)/cm²•sec•cmHg or less.

In the present invention, in the case that the high-permeability gas A is O₂ and the low-permeability gas B is N₂, in order to obtain high purity product gas (N₂) with a higher recovery rate more efficiently, the permeation rate P'O₂ of O₂ of each gas separation membrane module at 40°C is preferably 0.1×10⁻⁵cm³(STP)/cm²•sec•cmHg or more and 30×10⁻⁵cm³(STP)/cm² • sec • cmHg or less, more preferably 0.5×10⁻⁵cm³(STP)/cm²•sec•cmHg or more and 25×10⁻⁵cm³(STP)/cm²•sec•cmHg or less, still more preferably 0.8×10⁻⁵cm³(STP)/cm² • sec · cmHg or more and 20×10⁻⁵cm³(STP)/cm² • sec · cmHg or less, and particularly preferably 1×10⁻⁵cm³(STP)/cm²•sec•cmHg or more and 18×10⁻⁵cm³(STP)/cm²•sec•cmHg or less.

In the present invention, in the case that the high-permeability gas A is O₂ and the low-permeability gas B is N₂, in order to obtain high purity product gas (N₂) with a higher recovery rate more efficiently, the permeation rate P'N₂ of N₂ of each gas separation membrane module at 40°C is preferably 0.03×10⁻⁵cm³(STP)/cm²•sec•cmHg or more and 5×10⁻⁵cm³(STP)/cm² • sec · cmHg or less, more preferably 0.05×10⁻⁵cm³(STP)/cm²·sec·cmHg or more and 4×10⁻⁵cm³(STP)/cm²•sec•cmHg or less, still more preferably 0.05×10⁻⁵cm³(STP)/cm² • sec · cmHg or more and 3.5×10⁻⁵cm³(STP)/cm² • sec · cmHg or less, and particularly preferably 0.08×10⁻⁵cm³(STP)/cm²•sec•cmHg or more and 3×10⁻⁵cm³(STP)/cm²•sec•cmHg or less.

In the present invention, the gas permeability in the gas separation membrane module can be measured, for example, by the following method. Although examples of the method are given below for CH₄ and CO₂, other gases can be measured in a similar manner.

### (Method for measuring gas permeability of CH₄ and CO₂)

The gas permeability of CH₄ in a film is measured by measuring the flow rate of a gas having passed through the film having a predetermined film area at a temperature of 40°C when a pure gas of CH₄ is pressurized at a predetermined pressure using a thin film flowmeter. Gas permeability P'_{CH4} (unit: ×10⁻⁵cm³(STP)/cm² • sec · cmHg) to CH₄ membranes is calculated from the pressure, membrane area and permeated gas flow rate.

The gas permeability of the CO₂ membrane is measured by measuring the flow rate of the gas having passed through the membrane having a predetermined membrane area at a temperature of 40°C when the CO₂ pure gas is pressurized at a predetermined pressure. The gas permeability P'CO₂ (unit: ×10⁻⁵cm³(STP)/cm²•sec•cmHg) to the CO₂ membrane is calculated from the pressure, membrane area and permeated gas flow rate.

During the separation operation of the gas including CH₄ and CO₂, the gas flow rates at the gas inlet, permeated gas outlet, and non-permeated gas outlet of each module in the same unit and the concentrations of CH₄ and CO₂ in the gas may be measured, and the permeability of CO₂ and the gas separation selectivity (P'CO₂/P'CH₄) of each module may be calculated from the results using a known flow model. For example, it can be calculated by Expressions (1) to (20) described in THE CANADIAN JOURNAL OF CHEMICAL ENGINEERING., VOLUME 90, 2011, p 1253-1268. As the inner diameter and the outer diameter of the hollow fiber used for the calculation, for example, the inner diameter and the outer diameter of any five hollow fiber membranes from the module are measured by a measuring microscope, and the average value thereof can be used. The inner diameter may be, for example, 50 to 800 µm, and the outer diameter may be, for example, 100 to 1000 µm.

Exceptionally, the coefficient of variation when separating gases including CH₄ and CO₂ may be measured by a combination of N₂ and O₂ as long as the temperatures are the same. For example, before the separation operation of CO₂/CH₄, the module is taken out, compressed air is supplied to separate into an O₂ enriched gas and a N₂ enriched gas, the gas flow rates at the gas inlet, the permeated gas outlet, and the non-permeated gas outlet, and the concentrations of N₂ and O₂ in the gas is measured, and the gas permeability and the gas separation selectivity is back-calculated from the results using a general formula such as a counterflow model.

In this case, the coefficient of variation of the permeation rate of the O₂ gas can be regarded as the coefficient of variation of the permeation rate of CO₂, and the coefficient of variation of the gas separation selectivity (P'O₂/P'N₂) at 40°C can be regarded as the coefficient of variation of the gas separation selectivity (P'CO₂/P'CH₄) at the same temperature.

When the coefficient of variation of the gas separation membrane unit falls within the range of 0.01 to 0.49 in any of the plurality of methods, the coefficient of variation among the modules of the unit falls within a specific range.

The number of gas separation membrane modules in the gas separation membrane unit of the present invention is preferably 2 to 100, and more preferably 4 to 70. The gas separation membrane module preferably has a membrane area of 0.1 to 700 m², and more preferably 1 to 500 m². Further, the length of the gas separation membrane module is preferably 0.1 to 4 m, and more preferably 0.2 to 3 m. When the gas separation membrane module comprises a hollow fiber membrane, the preferred length of the hollow fiber membrane is also the same as the preferred length of the module.

Next, the gas separation system of the present invention will be further described.

Returning to Fig. 1, as shown in Fig. 1, the first gas separation membrane unit 11 and the second gas separation membrane unit 12 are connected in series. Specifically, the first gas separation membrane unit 11 and the second gas separation membrane unit 12 are connected by connecting the non-permeated gas outlet 11b of the first gas separation membrane unit 11 and the gas inlet 12a of the second gas separation membrane unit 12 by the first line 14.

Hereinafter, the respective gas inlets, the respective outlets, the supplied gas, the permeated gas, and the non-permeated gas of the first gas separation membrane unit 11 and the second gas separation membrane unit 12 may be described with the terms "first" and "second", respectively. The same applies to the configuration related to the third gas separation membrane unit 13 described later. Further, "upstream" and "downstream" described below are based on the flow direction of the raw material gas mixture.

A raw material gas mixture supply line 26 for supplying a raw material gas mixture from a raw material gas mixture source (not shown) to the first gas separation membrane unit 11 is connected to the first gas inlet 11a of the first gas separation membrane unit 11. A compression means 21 is disposed in the middle of the raw material gas mixture supply line 26.

The permeated gas outlet 12c of the second gas separation membrane unit 12 is connected to the raw material gas mixture supply line 26 by a second line 17. Specifically, the second line 17 is connected to the second permeated gas outlet 12c and the raw material gas mixture supply line 26 at the position on the suction side of the compression means 21.

The compression means 21 is installed for the purpose of pressurizing the raw material gas mixture supplied from the raw material gas mixture source. Further, the compression means 21 is installed for pressurizing the second permeated gas when the second permeated gas discharged from the second gas separation membrane unit 12 is returned to the first gas separation membrane unit 11 through the second line 17. A compressor can be used as the compression means 21.

A recovery line 15 for taking out the non-permeated gas that the gas B is concentrated and enriched connected to the non-permeated gas outlet 12b of the second gas separation membrane unit 12.

The operation of the gas separation system 10 of the present embodiment having the above-described configuration will be described. The raw material gas mixture including the gas A and the gas B to be separated is supplied to the first gas separation membrane unit 11 from the raw material gas mixture source (not shown) through the raw material gas mixture supply line 26. The raw material gas mixture is pressurized by the compression means 21 to increase the pressure of the raw material gas mixture.

When the raw material gas mixture pressurized by the compression means 21 is supplied to the first gas separation membrane unit 11, the raw material gas mixture is separated into a first permeated gas, which is a gas that has permeated the gas separation membrane, and a first non-permeated gas, which is a gas that has not permeated the gas separation membrane, due to a difference in permeation rate with respect to the gas separation membrane.

The first non-permeated gas discharged from the first gas separation membrane unit 11 is a gas in which the gas B is concentrated as compared with the raw material gas mixture. The first non-permeated gas is discharged from the non-permeated gas outlet 11b of the first gas separation membrane unit 11, and is supplied to the second gas separation membrane unit 12 through the first line 14.

On the other hand, in the first permeated gas discharged from the first gas separation membrane unit 11, the gas A is concentrated as compared with the raw material gas mixture. The first permeated gas is taken out of the system through the third line 18.

The first non-permeated gas discharged from the first gas separation membrane unit 11 is supplied to the second gas separation membrane unit 12, contacts the gas separation membrane of the second gas separation membrane unit 12, and is separated into the second permeated gas and the second non-permeated gas by the gas separation membrane of the second gas separation membrane unit 12. In the second non-permeated gas discharged from the second gas separation membrane unit 12, the gas B is further concentrated and enriched. The second non-permeated gas is taken out of the system from the second non-permeated gas outlet 12b of the unit 12 through the recovery line 15 as the enriched gas enriched with the gas B.

On the other hand, the second permeated gas is discharged from the second permeated gas outlet 12c of the second gas separation membrane unit 12, and is returned to the raw material gas mixture supply line 26 on the suction side of the compression means 21 in via the second line 17 connected to the outlet 12c.

The second permeated gas discharged from the second gas separation membrane unit 12 and returned via the second line 17 is mixed with the raw material gas mixture, and then pressurized by the compression means 21.

In the present embodiment, the gas separation membrane unit of the present invention is used as one or both of the first gas separation membrane unit 11 and the second gas separation membrane unit. As a result, excellent purity and recovery rate can be obtained. In the present invention, as an advantage of using the unit having a specific coefficient of variation in the system in which the product gas is taken out as the second non-permeated gas in two or more stages, it is possible to suppress the amplification of the variation in the flow rate of the supply gas flowing into each module due to the formation of a plurality of units. From the viewpoint of particularly enhancing the effect, both of the first gas separation membrane unit 11 and the second gas separation membrane unit 12 in the first gas separation membrane unit 11 and the second gas separation membrane unit 12 is preferably the gas separation membrane unit of the present invention. In addition, for example, in the first gas separation membrane unit 11 and the second gas separation membrane unit 12, the coefficients of variation of the gas separation selectivity or the gas permeability may be the same or different.

Next, a gas separation system 10' according to a second embodiment of the present invention will be described with reference to Fig. 4. In the description of the second embodiment, components similar to those of the first embodiment are denoted by the same reference numerals, description thereof is omitted, and differences from the first embodiment will be mainly described.

In the gas separation system 10' shown in Fig. 4, a first gas separation membrane unit 11 and a third gas separation membrane unit 13 are connected in series. Specifically, the first gas separation membrane unit 11 and the third gas separation membrane unit 13 are connected by connecting the permeated gas outlet 11c of the first gas separation membrane unit 11 and the gas inlet 13a of the third gas separation membrane unit 13 by the third line 18. As the gas separation membrane module constituting the third gas separation membrane unit 13, the same modules as those of the first gas separation membrane unit 11 and the second gas separation membrane unit 12 can be employed.

In the third gas separation membrane unit 13, the non-permeated gas outlet 13b is connected to the raw material gas mixture supply line 26 by a fourth line 41. In the embodiment of Fig. 3, the fourth line 41 is connected to the raw material gas mixture supply line 26 at the position on the suction side of the compression means 21. In the example of Fig. 3, the third permeated gas discharge line 19 is connected to the permeated gas outlet 13c of the third gas separation membrane unit 13.

The compression means 21 is installed for the purpose of pressurizing the raw material gas mixture supplied from the gas source, the second permeated gas returned from the second gas separation membrane unit 12, and the third non-permeated gas returned from the third gas separation membrane unit 13.

A gas path during operation for gas separation in the gas separation system 10' of the present embodiment having the above configuration will be described with reference to Fig. 3. The raw material gas mixture to be separated is supplied from the mixed gas source (not shown) to the first gas separation membrane unit 11 through the raw material gas mixture supply line 26. Prior to the supply, the raw material gas mixture is pressurized by the compression means 21 to increase the pressure of the raw material gas mixture.

As in the first embodiment, when the raw material gas mixture pressurized by the compression means 21 is supplied to the first gas separation membrane unit 11, the raw material gas mixture is separated into the first permeated gas and the first non-permeated gas. The first permeated gas discharged from the first gas separation membrane unit 11 is supplied to the third gas separation membrane unit 13 through the third line 18. The first permeated gas introduced into the third gas separation membrane unit 13 is separated into a third permeated gas and a third non-permeated gas by the unit 13. In the third permeated gas, the gas A is further concentrated and enriched as compared with the first permeated gas introduced into the third gas separation membrane unit 13, and is taken out of the system from the permeated gas outlet 13c of the unit 13 through the third permeated gas discharge line 19. On the other hand, the third non-permeated gas is discharged from the non-permeated gas outlet 13b of the third gas separation membrane unit 13, and is returned to the raw material gas mixture supply line 26 on the suction side of the compression means 21 via the fourth line 41 connected to the outlet 13b. The third non-permeated gas returned through the line 41 is mixed with the raw material gas mixture and then pressurized by the compression means 21.

The third line 18 may or may not be provided with a second compression means for pressurizing and delivering the first permeated gas to the third gas separation membrane unit.

In the embodiments shown in Figs. 1 and 4, the pressure of the compression means 21 is generally preferably 0.2 MPaG or more and 3.0 MPaG or less, and more preferably 0.3 MPaG or more and 2.4 MPaG or less, as the pressure of the gas supplied to the first gas separation membrane unit 11.

The pressure of the gas supplied to the third gas separation membrane unit 13 is preferably 0.05 MPaG or more and 1.2 MPaG or less, and more preferably 0.1 MPaG or more and 1.0 MPaG or less.

A preferable temperature range of the operation temperature (temperature of the gas separation membrane during operation) of each of the separation membrane units 11, 12, and 13 is preferably 0 to 80°C, more preferably 5 to 60°C, and still more preferably 10 to 50°C.

In the embodiment of Fig. 4, the unit of the present invention is used in any one or more, two or more, or all three of the first gas separation membrane unit 11 to the third gas separation membrane unit 13. As a result, excellent purity and recovery rate can be obtained. From the viewpoint of particularly enhancing the effect, two or more of the first gas separation membrane unit 11 to the third gas separation membrane unit 13 are preferably the gas separation membrane unit of the present invention, and more preferably all three of the first gas separation membrane unit 11 to the third gas separation membrane unit 13 are the gas separation membrane unit of the present invention.

The raw material gas mixture used in the present invention is preferably a gas containing at least CO₂ and CH₄, since the effect of making the coefficient of variation in the present invention equal to or less than a specific value is excellent. Examples of the raw material gas mixture include biogas, landfill gas, and natural gas. The biogas is a gas generated when a biomass raw material is brought into contact with a microorganism under anaerobic conditions to perform a fermentation treatment such as CH₄ fermentation by the microorganism. Examples of the biomass raw material include organic substances such as food waste, agricultural residue, sewage sludge, and livestock waste. The landfill gas is a gas generated by microbial decomposition or the like of organic substances in a waste landfill. Typically biogas and landfill mainly include CO₂ and CH₄.

In the present invention, when the raw material gas mixture contains CH₄, the raw material gas mixture preferably contains CH₄ in an amount of 30 mol% or more, particularly preferably 40 to 95 mol%. When the raw material gas mixture in the present invention contains CO₂, the raw material gas mixture preferably contains 3 to 70 mol% of CO₂ from the viewpoint of high technical significance of the gas separation system of the present invention, and particularly preferably contains 5 to 60 mol% of CO₂.

The raw material gas mixture used in the present invention is preferably a gas containing at least N₂ and O₂. When the raw material gas mixture contains N₂, the raw material gas mixture preferably contains N₂ in an amount of 1 mol% or more, particularly preferably 5 to 95 mol%. When the raw material gas mixture in the present invention contains O₂, the raw material gas mixture preferably contains 0.1 to 50 mol% of O₂ from the viewpoint of high technical significance of the gas separation system of the present invention, and particularly preferably contains 0.5 to 30 mol% of O₂.

Although the present invention has been described based on the preferred embodiments thereof, the present invention is not limited to the embodiments. For example, in addition to the compression means in the above-described embodiment, a decompression means may be provided on any one or two permeation sides of each gas separation membrane unit to apply power to the mixed gas supplied to each gas separation membrane unit to pass through the separation membrane. As such decompression means, a known vacuum pump or the like can be used. Also, the gas separation system of the present invention is not limited to the embodiments of Figs. 1 and 4, and may have only one gas separation membrane unit as described in Fig. 5. The embodiment of Fig. 5 is configured such that the permeated gas is taken out of the system from the first permeated gas discharge line, but the permeated gas of the first permeated gas discharge line may be refluxed to the raw material gas mixture supply line 26.

### EXAMPLES

Hereinafter, the present invention will be described in more detail with reference to Examples. However, the scope of the present invention is not limited by these examples.

This test is a model experiment for showing variations in gas separation selectivity and gas permeability, and was obtained by simulation according to the above-described method using the model described in THE CANADIAN JOURNAL OF CHEMICAL ENGINEERING., VOLUME 90, 2011, p 1253-1268.

The ratio of the gas permeability and the gas separation selectivity of the gas separation membrane module described below is a ratio of values at 40°C. In each of the gas separation membrane modules used in Examples and Comparative Examples, the membrane area was 95 m², and the entire length of the modules was the same.

### <Gas separation membrane module>

Table 1 shows the gas separation characteristics at 40°C of the gas separation membrane modules A and B used as a reference in Examples and Comparative Examples. A gas separation membrane made of an aromatic polyimide hollow fiber membrane to be housed in a case was assumed as the gas separation membrane module A. The units P'CO₂ and P'_{CH4} in Table 1 are ×10⁻⁵cm³(STP)/cm²•sec•cmHg.

**[Table 1]**

| Gas separation membrane module | P'_{CO2} | P'_{CH4} | P'_{CO2} / P'_{CH4} | Membrane area per one module m² |
|---|---|---|---|---|
| A | 9.9 | 0.18 | 55 | 95 |
| B | 5.0 | 0.18 | 28 | 95 |

### Comparative Examples 1 to 5 and Examples 1 to 11

Each of the first gas separation membrane unit 11 and the second gas separation membrane unit 12 had the configuration that four gas separation membrane modules were combined in parallel. The gas permeability at 40°C (permeation rate of CO₂ (P'_{CO2})) of each gas separation membrane module shown in Table 2 was the relative value with respect to the gas permeability at the same temperature (permeation rate of CO₂) of the reference gas separation membrane module A. The gas separation selectivity (P'CO₂/P'CH₄) shown in Table 2 is a value obtained by dividing the average value of the gas separation selectivity (P'CO₂/P'CH₄) at 40°C of the four gas separation membrane modules by the gas separation selectivity (P'CO₂/P'CH₄) at 40°C of the gas separation membrane module A.

The first gas separation membrane unit 11 and the second gas separation membrane unit 12 were configured in the system of Fig. 1, and a simulation was performed by operating the system under the following various conditions and the conditions of Table 2. The flow rate of the raw material gas mixture described below is the flow rate of the raw material gas mixture flowing into the system. The operation pressure is the pressure of the gas flowing into the first gas separation membrane unit 11. The operation temperature is the temperature of the gas separation membrane in each gas separation membrane unit. The CO₂ concentration and CH₄ recovery rate in the product gas are shown in Table 2.

### (Conditions)

·Flow rate (F0) of raw material gas mixture flowing into the system: 320 Nm³/h
·Composition of Material Mixture Gas: 40 mol% of CO₂, 60 mol% of CH₄:
   ·Pressure of gas flowing into the first gas separation membrane unit 11 (operating pressure): 1.0 MPaG
   ·Operation temperature of the first gas separation membrane unit 11: 40°C
   ·Operation temperature of the second gas separation membrane unit 12: 40°C

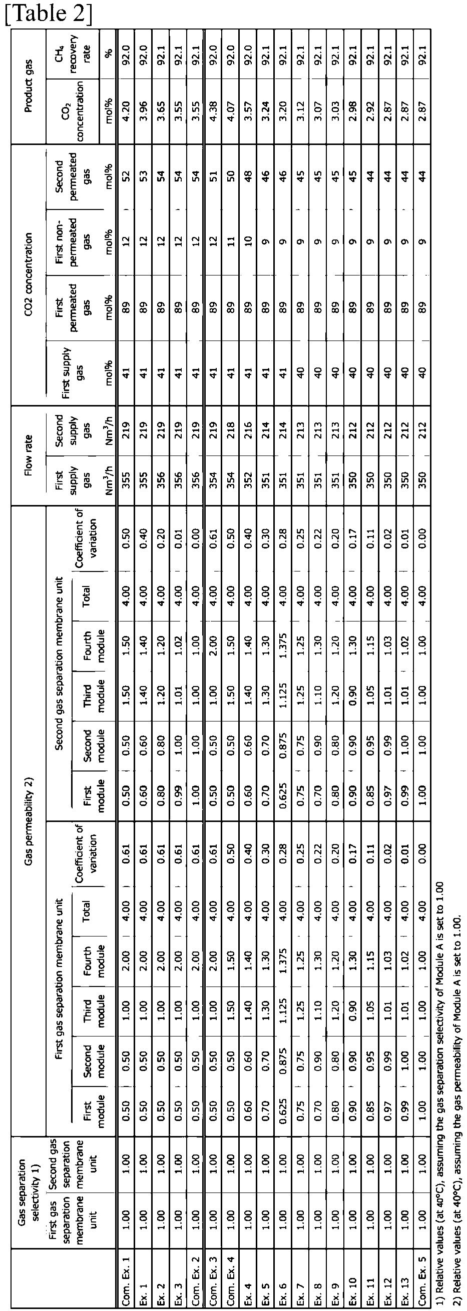

As can be seen from comparison with examples and Comparative Examples 1, 3, and 4 shown in Table 2, when the coefficient of variation of the gas permeability among the modules of the first gas separation membrane unit 11 or the second gas separation membrane unit 12 is 0.49 or less, the concentration of CO₂ in the product is less than 4.0 mol% which means that the purity can be effectively improved.

In addition, as can be seen from the comparison between Example 3 and Comparative Example 2 and the comparison between Example 13 and Comparative Example 5, when the coefficient of variation decreases to 0.01, the CO₂ concentration does not change and the recovery rate of CH₄ does not increase even if the coefficient of variation further decreases.

Therefore, by setting the coefficient of variation to 0.01 or more, the uniformity of the manufacturing conditions can be alleviated as compared with Comparative Examples 2 and 5, and the manufacturing cost can be reduced.

### Comparative Examples 6 and 7 and Examples 14 and 15

Each of the first gas separation membrane unit 11 and the second gas separation membrane unit 12 was configured by combining four gas separation membrane modules in parallel. The gas separation selectivity (P'CO₂/P'CH₄) of the four gas separation membrane modules was the relative values shown in Table 3 with respect to the reference gas separation membrane module A. The gas permeability (permeation rate of CO₂) shown in Table 3 is a value obtained by dividing the average value of the gas permeability (permeation rate of CO₂) at 40°C. of the four gas separation membrane modules by the gas permeability (permeation rate of CO₂) at 40°C of the gas separation membrane module A.

The first gas separation membrane unit 11 and the second gas separation membrane unit 12 were configured in the system of Fig. 1, and a simulation was performed by operating the system under the conditions of Table 3. The concentration of CO₂ and the recovery rate of CH₄ in the product gas are shown in Table 3.

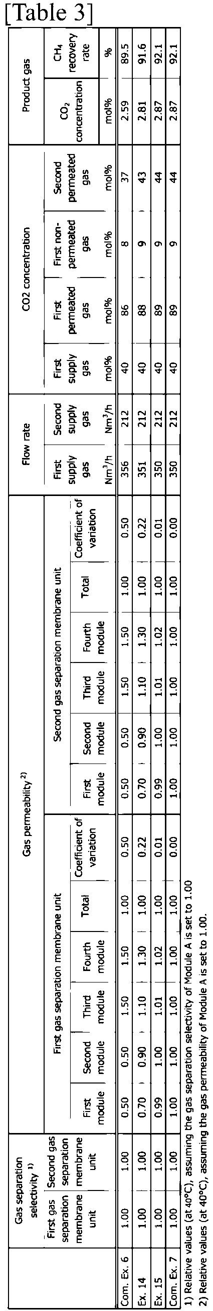

### Comparative Examples 8 and 9 and Example 16

Each of the first gas separation membrane unit 11, the second gas separation membrane unit 12, and the third gas separation membrane unit was configured by combining four gas separation membrane modules in parallel. The gas permeability (permeation rate of CO₂) of the four gas separation membrane modules at 40°C was a relative value shown in Table 4 with respect to the value of 40°C of the reference gas separation membrane module A. The gas separation selectivity (P'CO₂/P'CH₄) shown in Table 4 is a value obtained by dividing the average value of the values of the four gas separation membrane modules at 40°C by the gas separation selectivity (P'CO₂/P'CH₄) of the gas separation membrane module A at 40°C.

The first gas separation membrane unit 11, the second gas separation membrane unit 12, and the third gas separation membrane unit were configured in the system of Fig. 4, and a simulation was performed by operating the system under the conditions of Table 4. The CO₂ concentration and CH₄ recovery in the product gas are shown in Table 4.

### (Conditions)

·Flow rate (F0) of raw material gas mixture flowing into the system: 320 Nm³/h ·Composition of Material Mixture Gas: 40 mol% of CO₂, 60 mol% of CH₄
·Pressure of gas flowing into the first gas separation membrane unit 11 (operating pressure): 1.26 MPaG
·Pressure of gas flowing into the third gas separation membrane unit 13 (operating pressure): 0.20 MPaG
   ·Operation temperature of the first gas separation membrane unit 11: 40°C
   ·Operation temperature of the second gas separation membrane unit 12: 40°C
   ·Operation temperature of the third gas separation membrane unit 13: 40°C

**[Table 4]**

| | Gas permeability ²⁾ | | | | | | | | | | | | | | | | | |
|---|---|---|---|---|---|---|---|---|---|---|---|---|---|---|---|---|---|---|
| | First gas separation membrane unit | | | | | | Second gas separation membrane unit | | | | | | Third gas separation membrane unit | | | | | |
| | First module | Second module | Third module | Fourth module | Total | Coefficient of variation | First module | Second module | Third module | Fourth module | Total | Coefficient of variation | First module | Second module | Third module | Fourth module | Total | Coefficient of variation |
| Com. Ex. 8 | 1.00 | 1.00 | 1.00 | 1.00 | 4.00 | 0.00 | 1.00 | 1.00 | 1.00 | 1.00 | 4.00 | 0.00 | 0.50 | 0.50 | 1.50 | 1.50 | 4.00 | 0.50 |
| Ex. 16 | 1.00 | 1.00 | 1.00 | 1.00 | 4.00 | 0.00 | 1.00 | 1.00 | 1.00 | 1.00 | 4.00 | 0.00 | 0.99 | 1.00 | 1.01 | 1.02 | 4.00 | 0.01 |
| Com. Ex. 9 | 1.00 | 1.00 | 1.00 | 1.00 | 4.00 | 0.00 | 1.00 | 1.00 | 1.00 | 1.00 | 4.00 | 0.00 | 1.00 | 1.00 | 1.00 | 1.00 | 4.00 | 0.00 |

| | Gas separation selectivity ¹⁾ | | | Flow rate | | | CO2 concentration | | | | | | Product gas | |
|---|---|---|---|---|---|---|---|---|---|---|---|---|---|---|
| | First gas separation membrane unit | Second gas separation membrane unit | Third gas separation membrane unit | First supply gas | Second supply gas | Third supply gas | First supply gas | First permeated gas | First non-permeated gas | Second permeated gas | Third permeated gas | Third non-permeated gas | CO₂ concentration | CH₄ recovery rate |
| | | | | Nm³/h | Nm³/h | Nm³/h | mol% | mol% | mol% | mol% | mol% | mol% | mol% | % |
| Com. Ex. 8 | 1.00 | 1.00 | 1.00 | 455 | 269 | 186 | 50 | 92 | 21 | 71 | 99 | 76 | 2.99 | 99.60 |
| Ex. 16 | 1.00 | 1.00 | 1.00 | 430 | 265 | 165 | 47 | 90 | 20 | 69 | 99 | 64 | 2.87 | 99.53 |
| Com. Ex. 9 | 1.00 | 1.00 | 1.00 | 430 | 265 | 165 | 47 | 90 | 20 | 69 | 99 | 64 | 2.87 | 99.53 |

| | | | | | | | | | | | | | | |
|---|---|---|---|---|---|---|---|---|---|---|---|---|---|---|
| 1) Relative values (at 40°C), assuming the gas separation selectivity of Module A is set to 1.00 2) Relative values (at 40°C), assuming the gas permeability of Module A is set to 1.00. | | | | | | | | | | | | | | |

### Comparative Examples 10 and 11 and Example 17

In each of the first gas separation membrane unit 11, the second gas separation membrane unit 12, and the third gas separation membrane unit, the gas separation selectivity (P'CO₂/P'CH₄) of the four gas separation membrane modules at 40°C was the ratio shown in Table 5 with respect to the value of 40°C of the reference gas separation membrane module A. The gas permeability (permeation rate of CO₂) shown in Table 5 is the ratio of the average value of the four gas separation membrane modules at 40°C to the value of the reference gas separation membrane module A at 40°C.

The first gas separation membrane unit 11, the second gas separation membrane unit 12, and the third gas separation membrane unit were configured in the system of Fig. 4, and a simulation was performed by operating the system under the following conditions and the conditions of Table 5. The CO₂ concentration and CH₄ recovery in the product gas are shown in Table 5.

### (Conditions)

·Flow rate (F0) of raw material gas mixture flowing into the system: 320 Nm³/h
·Composition of Material Mixture Gas: 40 mol% of CO₂, 60 mol% of CH₄
·Pressure of gas flowing into the first gas separation membrane unit 11 (operating pressure): 1.26 MPaG
·Pressure of gas flowing into the third gas separation membrane unit 13 (operating pressure): 0.20 MPaG
   ·Operation temperature of the first gas separation membrane unit 11: 40°C
   ·Operation temperature of the second gas separation membrane unit 12: 40°C
   ·Operation temperature of the third gas separation membrane unit 13: 40°C

**[Table 5]**

| | Gas permeability ²⁾ | | | | | | | | | | | | | | | | | |
|---|---|---|---|---|---|---|---|---|---|---|---|---|---|---|---|---|---|---|
| | First gas separation membrane unit | | | | | | Second gas separation membrane unit | | | | | | Third gas separation membrane unit | | | | | |
| | First module | Second module | Third module | Fourth module | Total | Coefficient of variation | First module | Second module | Third module | Fourth module | Total | Coefficient of variation | First module | Second module | Third module | Fourth module | Total | Coefficient of variation |
| Com. Ex. 10 | 1.00 | 1.00 | 1.00 | 1.00 | 1.00 | 0.00 | 1.00 | 1.00 | 1.00 | 1.00 | 1.00 | 0.00 | 0.50 | 0.50 | 1.50 | 1.50 | 1.00 | 0.50 |
| Ex. 17 | 1.00 | 1.00 | 1.00 | 1.00 | 1.00 | 0.00 | 1.00 | 1.00 | 1.00 | 1.00 | 1.00 | 0.00 | 0.99 | 1.00 | 1.01 | 1.02 | 1.00 | 0.01 |
| Com. Ex. 11 | 1.00 | 1.00 | 1.00 | 1.00 | 1.00 | 0.00 | 1.00 | 1.00 | 1.00 | 1.00 | 1.00 | 0.00 | 1.00 | 1.00 | 1.00 | 1.00 | 1.00 | 0.00 |

| | Gas separation selectivity ¹⁾ | | | Flow rate | | | CO2 concentration | | | | | | Product gas | |
|---|---|---|---|---|---|---|---|---|---|---|---|---|---|---|
| | First gas separation membrane unit | Second gas separation membrane unit | Third gas separation membrane unit | First supply gas I | Second supply gas | Third supply gas | First supply gas | First permeated gas | First non-permeated gas | Second permeated gas | Third permeated gas | Third non-permeated gas | CO₂ concentra tion | CH₄ recovery rate |
| | | | | Nm³/h | Nm³/h | Nm³/h | mol% | mol% | mol% | mol% | mol% | mol% | mol% | % |
| Com. Ex. 10 | 1.00 | 1.00 | 1.00 | 428 | 265 | 163 | 47 | 90 | 20 | 69 | 99 | 63 | 2.86 | 99.38 |
| Ex. 17 | 1.00 | 1.00 | 1.00 | 430 | 265 | 165 | 47 | 90 | 20 | 69 | 99 | 64 | 2.87 | 99.53 |
| Com. Ex. 11 | 1.00 | 1.00 | 1.00 | 430 | 265 | 165 | 47 | 90 | 20 | 69 | 99 | 64 | 2.87 | 99.53 |

| | | | | | | | | | | | | | | |
|---|---|---|---|---|---|---|---|---|---|---|---|---|---|---|
| 1) Relative values (at 40°C), assuming the gas separation selectivity of Module A is set to 1.00 2) Relative values (at 40°C), assuming the gas permeability of Module A is set to 1.00. | | | | | | | | | | | | | | |

### Comparative Examples 12 and 13 and Example 18

Each of the first gas separation membrane unit 11 and the second gas separation membrane unit 12 had the configuration that four gas separation membrane modules were combined in parallel. The gas permeability at 40°C (permeation rate of CO₂ (P'_{CO2})) of each gas separation membrane module shown in Table 2 was the relative value with respect to the gas permeability at the same temperature (permeation rate of CO₂) of the reference gas separation membrane module B. The gas separation selectivity (P'CO₂/P'CH₄) shown in Table 6 is a value obtained by dividing the average value of the gas separation selectivity (P'CO₂/P'CH₄) at 40°C of the four gas separation membrane modules by the gas separation selectivity (P'CO₂/P'CH₄) at 40°C of the gas separation membrane module B.

The first gas separation membrane unit 11 and the second gas separation membrane unit 12 were configured in the system of Fig. 1, and a simulation was performed by operating the system under the following various conditions and the conditions of Table 2. The flow rate of the raw material gas mixture described below is the flow rate of the raw material gas mixture flowing into the system. The operation pressure is the pressure of the gas flowing into the first gas separation membrane unit 11. The operation temperature is the temperature of the gas separation membrane in each gas separation membrane unit. The CO₂ concentration and CH₄ recovery rate in the product gas are shown in Table 6.

### (Conditions)

·Flow rate (F0) of raw material gas mixture flowing into the system: 320 Nm³/h
·Composition of Material Mixture Gas: 40 mol% of CO₂, 60 mol% of CH₄:
   ·Pressure of gas flowing into the first gas separation membrane unit 11 (operating pressure): 1.0 MPaG
   ·Operation temperature of the first gas separation membrane unit 11: 40°C
   ·Operation temperature of the second gas separation membrane unit 12: 40°C

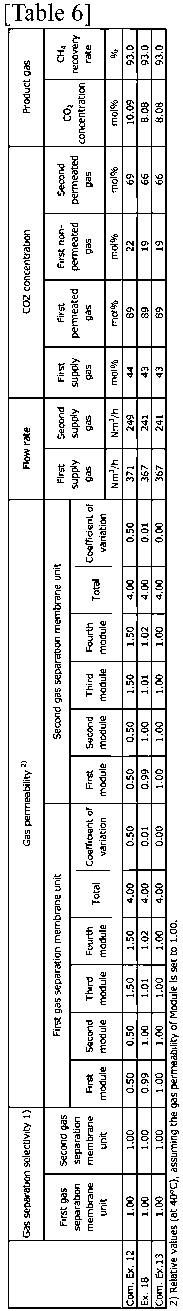

As can be seen from comparison with Example 18 and Comparative Example 12 shown in Table 6, when the coefficient of variation of the gas permeability among the modules of the first gas separation membrane unit 11 or the second gas separation membrane unit 12 is 0.49 or less, the concentration of CO₂ in the product is decreased significantly which means that the purity can be effectively improved.

In addition, as can be seen from the comparison between Example 18 and Comparative Example 13, when the coefficient of variation decreases to 0.01, the CO₂ concentration does not change and the recovery rate of CH₄ does not increase even if the coefficient of variation further decreases.

Therefore, by setting the coefficient of variation to 0.01 or more, the uniformity of the manufacturing conditions can be alleviated as compared with Comparative Example 13, and the manufacturing cost can be reduced.

### <Gas separation membrane module>

Table 7 shows the gas separation characteristics at 40°C of the gas separation membrane module C used as a reference in Examples and Comparative Examples. A gas separation membrane made of an aromatic polyimide hollow fiber membrane to be housed in a case was assumed as the gas separation membrane module A. The units P'O₂ and P'N₂ in Table 1 are ×10⁻⁵cm³(STP)/cm²•sec•cmHg.

**[Table 7]**

| Gas separation membrane module | P'_{O2} | P'N2 | P'_{O2} / P'_{N2} | Membrane area per one module m² |
|---|---|---|---|---|
| C | 2.2 | 0.33 | 6.6 | 95 |

### Comparative Examples 14 and 15 and Example 19

The first gas separation membrane unit 11 had the configuration that four gas separation membrane modules were combined in parallel. The gas permeability at 40°C (permeation rate of O₂ (P'O₂)) of each gas separation membrane module shown in Table 8 was the relative value with respect to the gas permeability at the same temperature (permeation rate of _{O2}) of the reference gas separation membrane module C. The gas separation selectivity (P'O₂/P'N₂) shown in Table 8 is a value obtained by dividing the average value of the gas separation selectivity (P'O₂/P'N₂) at 40°C of the four gas separation membrane modules by the gas separation selectivity (P'O₂/P'N₂) at 40°C of the gas separation membrane module C.

The first gas separation membrane unit 11 was configured in the system of Fig. 5, and a simulation was performed by operating the system under the following various conditions and the conditions of Table 8. The flow rate of the raw material gas mixture described below is the flow rate of the raw material gas mixture flowing into the system. The operation pressure is the pressure of the gas flowing into the first gas separation membrane unit 11. The operation temperature is the temperature of the gas separation membrane in each gas separation membrane unit. The O₂ concentration and N₂ recovery rate in the product gas are shown in Table 8.

### (Conditions)

·Flow rate (F0) of raw material gas mixture flowing into the system: 100 Nm³/h
·Composition of Material Mixture Gas: 21 mol% of O₂, 79 mol% of N₂:
   ·Pressure of gas flowing into the first gas separation membrane unit 11 (operating pressure): 1.0 MPaG
   ·Operation temperature of the first gas separation membrane unit 11: 40°C

**[Table 8]**

| | Gas separation selectivity | Gas permeability ²⁾ | | | | | | Flow rate | CO₂ concentration | | | Product gas | |
|---|---|---|---|---|---|---|---|---|---|---|---|---|---|
| | First gas separation membrane unit | First gas separation membrane unit | | | | | | First supply gas | First supply gas | First permeated gas | First non-permeated gas | O₂ concentration | N₂ recovery rate |
| | | First module | Second module | Third module | Fourth module | Total | Coefficient of variation | | | | | | |
| | | | | | | | | Nm³/h | mol% | mol% | mol% | mol% | % |
| Com. Ex. 14 | 1.00 | 0.50 | 0.50 | 1.50 | 1.50 | 4.00 | 0.50 | 100 | 21 | 37 | 6 | 6.22 | 62.3 |
| Ex. 19 | 1.00 | 0.99 | 1.00 | 1.01 | 1.02 | 4.00 | 0.01 | 100 | 21 | 39 | 4 | 3.87 | 62.6 |
| Com. Ex. 15 | 1.00 | 1.00 | 1.00 | 1.00 | 1.00 | 4.00 | 0.00 | 100 | 21 | 39 | 4 | 3.86 | 62.6 |

| | | | | | | | | | | | | | |
|---|---|---|---|---|---|---|---|---|---|---|---|---|---|
| 1) Relative values (at 40°C), assuming the gas separation selectivity of Module C is set to 1.00. 2) Relative values (at 40°C), assuming the gas permeability of Module is set to 1.00. | | | | | | | | | | | | | |

As can be seen from comparison with Example 19 and Comparative Example 14 shown in Table 8, when the coefficient of variation of the gas permeability among the modules of the first gas separation membrane unit 11 or the second gas separation membrane unit 12 is 0.49 or less, the concentration of O₂ in the product is decreased significantly which means that the purity can be effectively improved.

In addition, as can be seen from the comparison between Example 19 and Comparative Example 15, when the coefficient of variation decreases to 0.01, the O₂ concentration does not change and the recovery rate of N₂ does not increase even if the coefficient of variation further decreases.

Therefore, by setting the coefficient of variation to 0.01 or more, the uniformity of the manufacturing conditions can be alleviated as compared with Comparative Example 15, and the manufacturing cost can be reduced.

### Industrial Applicability

According to the present invention, a gas separation membrane unit capable of performing gas separation excellent in recovery rate and purity of a product gas, and a gas separation system using the same are provided.

## Claims

1. A gas separation membrane unit to which a raw material gas mixture is supplied to concentrate and enrich at least one of gases contained in the raw material gas mixture,
wherein the gas separation membrane unit comprises a plurality of gas separation membrane modules combined in parallel,
each of the gas separation membrane modules comprises: a gas inlet; a non-permeated gas outlet; and a permeated gas outlet,
the gas inlets of each of the gas separation membrane modules are shared to constitute the gas inlet of the gas separation membrane unit,
the non-permeated gas outlets of each of the gas separation membrane modules are shared to constitute the non-permeated gas outlet of the gas separation membrane unit,
the permeated gas outlets of each of the gas separation membrane modules are shared to constitute the permeated gas outlet of the gas separation membrane unit, and
a coefficient of variation of a gas separation selectivity among the plurality of gas separation membrane modules is 0.01 or more and 0.49 or less, or a coefficient of variation of a gas permeability among the plurality of gas separation membrane modules is 0.01 or more and 0.49 or less.

2. The gas separation membrane unit according to claim 1, wherein the gas separation membrane constituting the gas separation membrane module is a hollow fiber membrane comprising a polymer and having an asymmetric structure.

3. The gas separation membrane unit according to claim 1 or 2, being (1) or (2) below:
(1) The raw material gas mixture contains CO₂ and CH₄,
the gas separation selectivity is a permeation rate ratio P'CO₂/P'CH₄ of CO₂ to CH₄,
the gas permeability is a permeation rate P'CO₂ of CO₂, and
the unit of the permeation rate is cm³(STP)/cm²•sec•cmHg;
(2) The raw material gas mixture contains N₂ and O₂,
the gas separation selectivity is a permeation rate ratio P'O₂/P'N₂ of O₂ to N₂,
the gas permeability is a permeation rate P'O₂ of O₂, and
the unit of the permeation rate is cm³(STP)/cm²•sec•cmHg.

4. A gas separation system for supplying a raw material gas mixture to a gas separation membrane unit to enrich at least one of gases contained in the raw material gas mixture, wherein
the gas separation system comprises at least a first gas separation membrane unit comprising a gas inlet,
the gas separation system comprises:
a raw material gas mixture supply line connected to the gas inlet of the first gas separation membrane unit; and
a compression means disposed in the raw material gas mixture supply line;
the first gas separation membrane unit comprises the gas separation membrane unit according to any one of [1] to [3].

5. A gas separation system for supplying a raw material gas mixture to a gas separation membrane unit to concentrate and enrich at least one of gases contained in the raw material gas mixture, wherein
the gas separation system comprises: at least
a first gas separation membrane unit comprising a gas inlet and a non-permeated gas outlet; and
a second gas separation membrane unit comprising a gas inlet and a permeated gas outlet,
the gas separation system comprises:
a raw material gas mixture supply line connected to the gas inlet of the first gas separation membrane unit;
a compression means disposed in the raw material gas mixture supply line;
a first line connecting the non-permeated gas outlet of the first gas separation membrane unit and the gas inlet of the second gas separation membrane unit; and
a second line connecting the permeated gas outlet of the second gas separation membrane unit and the raw material gas mixture supply line, and
at least one of the first gas separation membrane unit and the second gas separation membrane unit comprises the gas separation membrane unit according to claim 1.

6. A gas separation system for supplying a raw material gas mixture to a gas separation membrane unit to concentrate and enrich at least one of gases contained in the raw material gas mixture, wherein
the gas separation system comprises:
a first gas separation membrane unit comprising a gas inlet, a non-permeated gas outlet and a permeated gas outlet;
a second gas separation membrane unit comprising a gas inlet and a permeated gas outlet; and
a third gas separation membrane unit comprising a gas inlet and a non-permeated gas outlet,
the gas separation system comprises:
a raw material gas mixture supply line connected to the gas inlet of the first gas separation membrane unit;
a compression means disposed in the raw material gas mixture supply line;
a first line connecting the non-permeated gas outlet of the first gas separation membrane unit and the gas inlet of the second gas separation membrane unit;
a second line connecting the permeated gas outlet of the second gas separation membrane unit and the raw material gas mixture supply line; and
a third line connecting the permeated gas outlet of the first gas separation membrane unit and the gas inlet of the third gas separation membrane unit; and
a fourth line connecting the non-permeated gas outlet of the third gas separation membrane unit and the raw material gas mixture supply line, and
at least one of the first gas separation membrane unit, the second gas separation membrane unit and the third gas separation membrane unit comprises the gas separation membrane unit according to claim 1.

7. A method for producing an enriched gas by using the gas separation system according to claim 5 or 6, wherein the enriched gas is removed from the non-permeated gas outlet of the second gas separation membrane unit.
